**Europäisches Patentamt**

**European Patent Office**

**Office européen des brevets**

(19)

(11) Veröffentlichungsnummer : **0 424 613 B1**

(12)

# EUROPÄISCHE PATENTSCHRIFT

(45) Veröffentlichungstag der Patentschrift :
30.06.93 Patentblatt 93/26

(51) Int. Cl.$^5$ : **C08J 9/10,** // C08L75:04

(21) Anmeldenummer : **90113848.7**

(22) Anmeldetag : **19.07.90**

(54) **Verfahren zur Herstellung von Polyurethan-Schaumkunststoffen.**

(43) Veröffentlichungstag der Anmeldung :
**02.05.91 Patentblatt 91/18**

(45) Bekanntmachung des Hinweises auf die
Patenterteilung :
**30.06.93 Patentblatt 93/26**

(84) Benannte Vertragsstaaten :
**AT BE CH DE DK ES FR GB GR IT LI LU NL SE**

(56) Entgegenhaltungen :
CA-A- 767 719
FR-A- 1 009 505
US-A- 2 250 192

(73) Patentinhaber : **Prignitz, Herbert**
**Pergamentweg 7**
**W-2000 Hamburg 74 (DE)**

(72) Erfinder : **Redha, Najdat, Dipl.-Chem.**
**Gründgensstrasse 16**
**W-2000 Hamburg 60 (DE)**
Erfinder : **Prignitz, Herbert**
**Pergamentweg 7**
**W-2000 Hamburg 74 (DE)**

(74) Vertreter : **Richter, Werdermann & Gerbaulet**
**Neuer Wall 10**
**W-2000 Hamburg 36 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Polyurethan-Schaumkunststoffen, wobei die Verschäumung unter Verwendung von reinem Stickstoff als Treibmittel erfolgt.

Schaumkunststoffe mit geschlossener oder offenporiger Zellstruktur werden entweder durch drucklose Schaumerzeugung oder durch plötzliches Entspannen von Gasen, Treibmitteln oder Lösungsmitteln erhalten, die bei höheren Temperaturen einen Blähdruck in der plastischen oder flüssigen Kunststoffmasse hervorrufen. Die Schaumstruktur entsteht dabei aufgrund chemischer Reaktionen, wie beispielsweise beim Polyurethan, durch Zugabe von Blähmitteln, die sich bei bestimmter Temperatur während der Verarbeitung unter Gasbildung wie $N_2$ oder $CO_2$ zersetzen, wobei auch der Zusatz von flüchtigen Lösungsmitteln während der Polymerisation bekannt ist. Die Verschäumung selbst erfolgt entweder beim Verlassen des Extrusionswerkzeuges, d.h. im Anschluß an das Extrudieren oder Spritzgießen oder in der offenen Form. Schaumstabilisatoren verhindern dabei das Zusammenfallen des Schaumes vor der Härtung. Porenbildende Treibmittel (Blähmittel), wie Azo- und Diazoverbindungen, spalten unter dem Einfluß von Wärme oder Katalysatoren unter anderem $N_2$ ab.

Die größte technische Bedeutung besitzen unter den Schaumkunststoffen die Polyurethan-Schaumkunststoffe (PUR), die durch stufenweise Polyaddition von Diisocyanaten an Diolen erhalten werden, wen Wasser und/oder Carbonsäuren zugegen sind, dem diese reagieren mit den Isocyanaten unter Bildung von blähend und schaumbildend wirkendem Kohlendioxid. Als Isocyanatkomponenten kommen hauptsächlich niedermolekulare Diisocyanate und als Diole Polyester- und Polyether-Polyole infrage. Zusätzlich benötigte Hilfsstoffe bei dieser Polyaddition sind Katalysatoren, Emulgatoren, Schaumstabilisatoren u.dgl.

Es ist bekannt, daß bei der Herstellung von PUR-Schaumstoffen Fluor-Chlor-Kohlenwasserstoffe (FCKW) als Haupt-Treibmittel verwendet werden. Daneben kommt auch dem $CO_2$ eine treibende Wirkung zu, das sich durch Reaktion des zugesetzten Wassers mit dem vorhandenen Cyanat bildet. Ein FCKW-freier Schaumstoff, bei dem $CO_2$ als alleiniges Treibmittel benutzt würde, hätte folgende Nachteile:

1) Die Diffusion des $CO_2$ aus den Schaumzellen in die Umgebung verläuft schneller als die umgekehrte Diffusion der Luft in diese Zellen hinein. Dadurch entsteht in den Zellen ein Unterdruck gegenüber der Atmosphäre, der während der Aushärtungszeit des Schaumstoffes ein Einfallen des Schaumkörpers hervorruft. Diese Instabilität müßte durch ein wesentlich erhöhtes Raumgewicht des Schaumstoffes ausgeglichen werden.

2) Die Reaktion des Cyanats mit Wasser ist exotherm. Durch die zusätzlich entwickelte Wärme entstehen Risse und Kernverfärbungen z.B. in Blockschäumen.

Die Verwendung von Ammoniumnitrit als Treibmittel bei der Herstellung von Hohlkörpern, wie Bällen od.dgl., ist nach DE-Lit. H.Römpp, Chemie-Lexikon, 5.Auflage, Stichwort: "Ammoniumnitrit", S. 232, bekannt. Die FR-A-1.009.505 beschreibt ein Verfahren zur Herstellung verzellter Stoffe, das darin besteht, daß als Mittel zur Aufschäumung der zu behandelnden Masse ein Gemisch aus Komponenten verwendet wird, die jeweils aus einem inerten Trägermaterial bestehen, in dem ein Wirkstoff fein verteilt worden ist, der geeignet ist, bei der Herstellung des verzellten Stoffes mit dem Wirkstoff oder den Wirkstoffen der anderen Komponenten zu reagieren. Als inerte Trägermaterialien sind alle natürlichen, höheren, organischen Polymere, alle synthetischen höheren Polymere, alle Lösungsmittel, Treibmittel, Aufweichungsmittel und Weichmacher der genanten höheren Polymere, sowie Gemische aus diesen, einsetzbar. Als Wirkstoff mit der Reaktion einer Gasfreisetzung kann jede Substanz verwendet werden, die mit mindestens einem anderen Stoff derart reagiert, daß mindestens eines der Reaktionsprodukte ein Gas ist, wobei die Substanz selbst Gas freisetzen kann. Der Wirkstoff zur Gasfreisetzung besteht aus einer beliebigen Ammoniumverbindung, insbesondere aus einem Ammoniumsalz, einer beliebigen organischen oder anorganischen Säure, einschließlich der Ammoniumkomplexsalze und der Ammoniumdoppelsalze. Auch anorganische oder organische Nitrite können als Wirkstoff für eine Reaktion zur Gasfreisetzung verwendet werden. Mit diesem Verfahren sollen die Nachteile vermieden werden, die sich bei der Anwendung von Salzgemischen aus Ammaniumchlorid und Natriumnitrit ergeben. Ein derartiges Salzgemisch zerfällt unter Freisetzung von Stickstoff, wenn ein Ammoniumchloridmolekül mit einem Natriumnitritmolekül reagiert. Da aber diese beiden Stoffe als an organische Substanzen einerseits in organischen Stoffen sehr schwer löslich sind und andererseits, wie die meisten entsprechenden Wirkstoffe, zum Aufschäumen organischer Massen verwendet werden, ist es erforderlich, die beiden Reaktionspartner in innige Berührung miteinander zu bringen. Mit einem nicht bearbeiteten Salzgemisch ist dies unmöglich, da sich dieses während der Lagerung mit der Zeit vollständig zersetzen würde. Nach dem bekannten Verfahren ist es möglich, dieses Gemisch maximal aufzuschäumen, wen jedes der Treibmittel extrem zerkleinert in einem inerten Trägermaterial dispergiert wird. Voraussetzung ist somit die Verwendung eines inerten Trägermaterials.

Die US-A 2.250.192 beschreibt ein Verfahren zur Herstellung von mit Gas aufgeschäumten Gummiprodukten, das darin besteht, daß zwei verschiedene Vulkanisationsmittel in eine vulkanisierbare Kautschukmischung eingemischt werden, wobei jedes der Vulkanisationsmittel den Kautschuk in einem anderen Temperaturbereich oder mit einer anderen Geschwindigkeit vulkanisieren kann und wobei eines der genannten Vulkanisationsmittel ein schwefelfreies, aus der Klasse der Polynitrobenzole, Peroxide organischer Säuren, halogenierten Chinone, Chinonoxime und Chinonimine ausgewähltes Vulkanisationsmittel ist und bei niedrigeren Temperaturen eine höhere Aktivität als Schwefel besitzt, während das andere Vulkanisationsmittel Schwefel ist. Bei diesem bekanten Verfahren wird zur Expansion des Kautschuks Gas mit geringem Diffusionsvermögen in Kautschuk eingesetzt, wie z.B. Stickstoffgas.

Einen Polyurethanhartschaum mit einer Dichte von etwa 20 g/l bis etwa 60 g/l und einem Anteil von etwa 10 bis etwa 80% des gesamten Porenvolumens in Form von Poren mit einem Durchmesser von mindestens etwa 1 mm sowie einem Anteil von mindestens 75% des restlichen Porenvolumens in Form von Poren mit einem Durchmesser von weniger als 250 µm beschreibt die CA-A-767.719. Ein derartiger Polyurethanhartschaum wird durch Vermischen eines Katalysators, eines Polyols, von Polyisocyanat, einem Treibmittel zur Makroporenbildung und einem Mikroporenbildungsmittel erhalten, wobei die Mikroporenbildung zunächst ausgelöst wird, wohingegen sich dann danach die Aktivierung des Treibmittels zur Makroporenbildung anschließt, so daß dann letztlich nach der Aushärtung ein Polyurethanschaum mit Mikroporen und einer kontrollierten Menge an Makroporen erhalten wird. Als Treibmittel werden solche eingesetzt , die bei einer Temperatur unterhalb der Verkohlungstemperatur von Polyurethanschaum aktiviert werden, so u.a. Oxalylazid, Ammoniumcarbonat, Hydrazinnitrit, Ammoniumnitrit, Phthaloylazid und Benzoylazid.

Die Verwendung von Ammoniumnitrit als Treibmittel für die Schaumstoffherstellung ist hiernach bekannt. Soweit $CO_2$ erzeugt wird, ergeben sich die eingangs geschilderten Nachteile. Bei keinem der bekannten Verfahren wird jedoch eine Ammoniumsalze und Alkalinitrit enthaltende gekühlte wässrige Lösung verwendet, um zu erreichen, daß in der Vorphase des eigentlichen Schäumungsprozesses nur eine sehr geringe Reaktion unter $N_2$-Bildung entsteht, bevor das Schaumstoffgemisch in eine Form ausgetragen ist.

Der Erfindung liegt die Aufgabe zugrunde, Fluorkohlenwasserstoff (FCKW)-freie Schaumstoffe mit einer hohen Schaumfestigkeit bei geringem Raumgewicht des Schaumes herzustellen, wobei der $CO_2$-Gehalt während des Schäumungsprozesses niedrig gehalten werden soll, während der Aushärtungsphase ein Zusammenfallen des Schaumes vermieden wird und vor dem eigentlichen Schäumungsprozeß in einer Form nur eine sehr geringe Reaktion unter $N_2$-Bildung entsteht.

Diese Aufgabe wird bei einem Verfahren zur Herstellung von Polyurethan-Schaumkunststoffen, gemäß der eingangs beschriebenen Art durch die im Anspruch 1 angegebenen Verfahrensmaßnahmen gelöst.

Das Verfahren besteht somit in der Herstellung von FCKW-freien Schaumstoffen unter Verwendung von reinem Stickstoff als Treibmittel, der durch eine simultane, binäre Ionenreaktion erzeugt wird, wobei als Ionen bildende wässrige Lösung z.B. Lösungen aus Ammoniumchlorid und Natriumnitrit verwendet werden. Hierdurch wird ein Teil der Treibwirkung durch reinen Stickstoff erzielt. Dieser wird in einer binären Reaktion während des Herstellungsprozesses nach folgender Ionengleichung gebildet:

$$NH_4^+ + NO_2^- = N_2 + 2H_2O.$$
Äquivalentgewicht 53,49g      68,99g

Es werden äquivalente Mengen in gesättigten Lösungen verwendet und bei niedriger Temperatur unter 20°C der einen Reaktionskomponente des Schaumreaktionsgemisches zugegeben, wobei die eine Reaktionskomponente A die Polyole mit den Hilfsstoffen, wie Emulgatoren, Aktivatoren u.dgl. bildet, wohingegen die zweite Reaktionskomponente B die Diisocyanate umfaßt. Die Lösung aus Ammoniumchlorid und Natriumnitrit wird ausschließlich der Reaktionskomponente A hinzugegeben.

Anstelle von Ammoniumchlorid- und Natriumnitrit-Lösungen können auch Lösungen anderer Salze eingesetzt werden, jedoch kommen nur solche Salze zur Anwendung, die in wässrigem oder einem anderen geeigneten Medium unter Bildung von $NH_4^+$- und $NO_2^-$-Ionen dissoziierend miteinander reagieren und Stickstoff bilden. Die Ionen werden dabei in wässriger Lösung aus Ammoniumsalzen ( z.B. $NH_4$ Cl, $(NH_4)_2SO_4$) und Alkalinitriten ( z.B. $NaNO_2$, $KNO_2$) gebildet. Es werden äquivalente Mengen in gesättigten Lösungen verwendet. Vorteilhaft ist es, wenn ein geringer Überschuß des Ammoniumsalzes verwendet wird, um das vorhandene Nitrit sicher umzusetzen.

Der durch das erfindungsgemäße Verfahren erreichte Ersatz eines Teiles des $CO_2$ durch $N_2$ vermeidet die oben aufgeführten Nachteile: Der Diffusionskoeffizient des $N_2$ im PUR-Schaum ist rund 30 mal kleiner als der des $CO_2$. Dadurch, bleibt der Druck in den Zellen groß genug, um ein Einfallen des Schaumes während der Aushärtungsphase zu vermeiden. Der stabilisierende Effekt des $N_2$ wird noch dadurch verstärkt, daß für das schnell diffundierende $CO_2$ nunmehr das Konzentrationsgefälle kleiner ist und dadurch die Diffusionsgeschwindigkeit verringert wird. Infolge der dadurch gegebenen geringeren Beanspruchung des Schaumgerüstes bei gleicher Formstabilität kann das Raumgewicht niedriger gehalten werden, worin der Hauptvorteil des erfindungsgemäßen Verfahrens liegt.

Ein weiterer Vorteil besteht darin, daß nach dem Zusammengeben der beiden Kamponenten eine Mischung von sahniger Konsistenz erhalten wird. Dadurch wird der Schaum besonders feinporig. Auch wird ein Austreten des Reaktionsgemisches aus undichten Stellen der Form vermieden. Beim Verrühren der beiden Reaktionskomponenten wird keine flüssige Komponente, sondern ein Produkt von sahniger Konsistenz erhalten, das erste Anfänge einer Schaumbildung erkennen läßt.

Überraschenderweise hat es sich gezeig⁺, daß bei der Verwendung von $NH_4^+$- und $NO_2^-$-Ionen bildender gesättigter Lösung in dem äquivalenten Gewichtsverhältnis , die vor dem Vermischen der Reaktionskomponenten A und B bei niedrigen Temperaturen der Reaktions-Schaumkomponente A zugesetzt wird und erst nach der Vermischung und nachdem das Schaumstoffgemisch z.B. der Form zugeführt oder bei einer Bandschäumung bereits aufgetragen worden ist, die Wärme der einsetzenden exothermen Reaktion der Schaumstoffkomponenten ebenfalls die chemische Reaktion der Lösung unter $N_2$-Bildung unterstützt und somit Stickstoff freigesetzt wird, der hier eine Funktion als Treibmittel übernimmt, Schaumkunststoffe ohne Rißbildung und Kernverfärbungen mit hoher Feinporigkeit und niedrigem Raumgewicht und hoher Stabilität der Zellstruktur erhalten werden. Das vorhandene Wasser verbindet sich dann zum Beispiel durch Reaktion mit einem Teil der Cyanat-Komponente des Schaumstoffes unter Freisetzung von $CO_2$, der die weitere Schäumung unterstützt. Der partielle Anteil des $N_2$ -Gehaltes an Stickstoff reicht aus, um nach dem Schäumvorgang die Formstabilität des aushärtenden Schaumes bei geringem Raumgewicht zu gewährleisten.

Wesentlich ist, daß die Ammoniumsalze und die Alkalinitrit enthaltende Lösung vor ihrer Verwendung soweit gekühlt ist, daß eine sehr geringe, d.h. schwache Reaktion unter $N_2$ - Bildung entsteht, bevor das Schaumstoffgemisch in die Form ausgetragen ist. Erst durch die Wärme der exothermen Reaktion der Schaumstoffkomponenten setzt die Reaktion in der Mischung unter $N_2$ -Bildung ein. Durch diese anfängliche Kühlung soll erreicht werden, daß bereits zu Beginn des Schäumungsprozesses keine große Menge an Stickstoff freigesetzt wird, da die größere Menge an Stickstoff für den Schäumungsprozeß zur Verfügung stehen muß. Die eingesetzten Lösungen können für sich allein oder nach dem Hinzufügen zu der Reaktionskomponente A zusammen mit der entsprechenden Reaktionskomponente gekühlt werden.

**Patentansprüche**

1.  Verfahren zur Herstellung von Polyurethan-Schaumkunststoffen, wobei die Verschäumung unter Verwendung von reinem Stickstoff als Treibmittel erfolgt, dadurch gekennzeichnet, daß der Stickstoff durch simultane, binäre Reaktion der Ionen $NH_4^+$ und $NO_2^-$ zweier $NH_4^+$ und $NO_2^-$-Ionen bildenden wässrigen Lösungen aus Ammoniumsalzen und Alkalinitriten, wie Ammoniumchlorid- oder Ammoniumsulfat-Lösung und Natriumnitrit- oder Kaliumnitrit-Lösung, erhalten wird, wobei die Ammoniumsalze und Alkalinitrit enthaltende Lösung vor dem Einbringen der Schaumstoffgemisch-Komponenten in eine Form zur Erzeugung einer Reaktion zur $N_2$-Bildung während der Vermischung der Schaumstoffkomponenten gekühlt oder auf höchstens 25 Grad Celsius gebracht wird, wohingegen der eigentliche Treibeffekt beim Schäumungsprozeß erzielt wird durch die Wärme der eintretenden exothermen Reaktion der Schaumstoffkomponenten oder durch von außen zugeführte Wärme, sodaß die Reaktion der Salzlösungen einsetzt und die weitere $N_2$-Bildung erfolgt, wobei die Lösung aus Ammoniumsalzen und
    Alkalinitrit ausschließlich der Reaktionskomponente A des aus zwei Reaktionskomponenten A und B bestehenden Schaumreaktionsgemisches hinzugegeben wird, wobei die Reaktionskomponente A Polyole mit Hilfsstoffen, wie Emulgatoren und Aktivatoren, und die Reaktionskomponente B die Diisocyanate umfaßt.

2.  Verfahren nach Anspruch 1, dadurch gekennzeichnet, daß gesättigte Lösungen von Ammoniumsalzen und Alkalinitriten vorzugsweise in einem äquivalenten Gewichtsverhältnis von Ammoniumsalz zu Alkalinitrit verwendet werden.

**Claims**

1.  Process for the preparation of polyurethane foams in which the foaming is effected by the use of pure nitrogen as blowing agent,
    characterized in that
    the nitrogen is obtained by the simultaneous, binary reaction of the ions $NH_4^+$ and $NO_2^-$ of two aqueous solutions of ammonium salts and alkali nitrites, such as ammonium chloride or ammonium sulfate and sodium nitrite which form $NH_4^+$ and $NO_2^-$ ions, in which case the solution containing the ammonium salts and alkali nitrites, prior to the discharge of the foam mixture components into a mould, in order to produce a reaction for the formation of $N_2$, during the intermixing of the foam component, is cooled or brought to at the most 25°C, whereas the actual blowing effect during the foaming process is achieved by the heat of the starting exothermic reaction of the foam components or by heat supplied from the outside so that the reaction of the salt solutions commences and the further $N_2$ formation takes place, in which case the solution of ammonium salts and alkali nitrite is added exclusively to the reaction component A of the foam mixture comprising the two reaction components A and B, while the reaction component comprises polyoles with auxiliary agents, such as emulsifiers and activators, and the reaction component B the diisocyanates.

2.  Process according to Claim 1, characterized in that saturated solutions of ammonium salts and alkali nitrites, by preference at an equivalent weight ratio of ammonium salt to alkali nitrite are employed.

## Revendications

1.  Procédé pour préparer des mousses de polyuréthane, la transformation en mousse étant réalisée en utilisant de l'azote pur comme agent moussant, **caractérisé en ce** que l'azote est obtenu par réaction binaire simultanée des ions $NH_4^+$ et $NO_2^-$ de deux solutions aqueuses de sels d'ammonium et de nitrites alcalins, tels qu'une solution de chlorure d'ammonium ou de sulfate d'ammonium et une solution de nitrite de sodium ou de nitrite de potassium, qui forment des ions $NH_4^+$ et $NO_2^-$, la solution qui contient les sels d'ammonium et le nitrite alcalin étant refroidie avant l'introduction des composants du mélange pour la mousse dans une forme pour la production d'une réaction pour la formation de $N_2$ pendant le mélange des composants de mousse ou étant amenée à un maximum de 25 degrés Celsius, tandis que l'effet moussant proprement dit lors du processus de moussage est obtenu par la chaleur de la réaction exothermique des composants de la mousse qui intervient ou par de la chaleur amenée de l'extérieur si bien que la réaction des solutions salines commence et que le reste de la formation de $N_2$ se fait, la solution composée de sels d'ammonium et de nitrite alcalin étant ajoutée exxlusivement à la composante de réaction A du mélange de réaction moussante constitué par deux composantes de réaction A et B, la composante de réaction A comprenant des polyols avec des substances auxiliaires, telles que des émulgateurs et activateurs, et la composante de réaction B les diisocyanates.

2.  Procédé selon la revendication 1, caractérisé en ce que l'on utilise des solutions saturées de sels d'ammonium et de nitrites alcalins de préférence dans un rapport de poids équivalent de sels d'ammonium et de nitrite alcalin.